# EUROPÄISCHE PATENTANMELDUNG

(11) **EP 0 547 285 A1**
(43) Veröffentlichungstag der Anmeldung: **23.06.1993**
(21) Anmeldenummer: 92104922.7
(22) Anmeldetag: 20.03.1992
(51) Int. Cl.: H01L 31/042, B28B 11/12

(54) **Solar-Dachziegel und Verfahren zu seiner Herstellung**

(30) Priorität: 17.12.1991 DE 4141664
(71) Anmelder: RIETER-WERKE HÄNDLE KG, D-78467 Konstanz (DE)
(72) Erfinder: Laumans, Albert Joseph Antoine, NL-5932 AW Tegelen (NL); Lepsien, Reinhard, Dipl.-Ing., W-7753 Radolfzell (DE); Müller, Heinz, W-7709 Hilzingen 6 (DE)
(74) Vertreter: Liesegang, Roland, Dr.-Ing.

(57) **Zusammenfassung**

Solar-Dachziegel aus einem Ziegel (10) und einer darauf befestigbaren Solarzellen-Platte (11), bei dem bei einer ersten Ausgestaltung der Erfindung die Befestigung von Solarzellen-Platte zu Dachziegel aus einer lösbaren Auge-Stift-Verbindung (12,13) und einer Randzonenüberdeckung durch den Nachbarziegel (10') besteht. Bei einer anderen Ausgestaltung weist der Dachziegel (20) an seinem Kopf- (20b) und seinem Fußbereich (20a) jeweils einen leistenartigen Ansatz (22a,22b) mit einer Einschubnut (23a,23b) auf, die zwei Führungsschienen zum Einbringen einer Solarzellen-Platte (21) bilden. Dachziegel und Solarzellen-Platte sind deshalb jederzeit wieder voneinander zu trennen.

## Beschreibung

Die Erfindung betrifft Solar-Dachziegel, bestehend aus einen Dachziegel und einer darauf angebrachten, plattenförmigen Solarzelle, sowie Verfahren und eine Vorrichtung zur Herstellung von Solar-Dachziegeln.

Es ist seit langen bekannt, Solarzellen auf Hausdächern anzubringen, um damit den im Haus anfallenden Energiebedarf ganz oder teilweise zu decken. Man geht dabei in allgemeinen so vor, daß die ganze oder ein Teil der Dacheindeckung durch vergleichsweise große Solarzellen-Platten, beispielsweise einer Größe von 1 m², ersetzt wird. Nachteilig dabei ist, daß aufwendige Abdichtungen zwischen den einzelnen Solarzellen-Platten erforderlich sind, daß der Austausch derart großer Solarzellen-Platten, etwa bei einer Beschädigung, sehr kostspielig ist und daß während eines solchen Austauschs das Dach an dieser Stelle offen ist. Zur Vermeidung dieser Nachteile sind in letzter Zeit Versuche mit einem anderen System unternommen worden, bei welchem das Dach in der üblichen Weise mit Dachziegeln oder Dachsteinen eingedeckt und dann auf den Dachziegeln bzw. -steinen jeweils Solarzellen-Platten befestigt werden, deren Größe in etwa der Größe der Sichtflächen der verwendeten Dachziegel entspricht. Die Befestigung der Solarzellen-Platten auf den Dachziegeln erfolgt dabei mittels besonderer Kleber oder mittels Silikon. Damit wird zwar gegenüber der eingangs erwähnten Methode die aufwendige Abdichtung der Solarzellen-Platten untereinander eingespart, die Dichtheit des Dachs wird ja durch die Dachziegel gewährleistet, die Austauschkosten sind infolge der wesentlich kleineren Solarzellen-Platten geringer und es besteht die Möglichkeit einer späteren Vergrößerung des Solarzellenbereichs bei anfänglicher Teileindeckung mit Solarzellen-Platten, jedoch ist weiterhin der Nachteil gegeben, daß bei einem Austausch die "Dachhaut" geöffnet werden muß, weil die Solarzellen-Platten von den Dachziegeln, auf die sie aufgeklebt sind, nicht mehr gelöst werden können.

Aufgabe der vorliegenden Erfindung ist es deshalb, einen Solar-Dachziegel zu schaffen, bei dem die Verbindung zwischen der Solarzellen-Platte und dem darunter befindlichen Dachziegel leicht lösbar ist, trotzdem aber im verbundenen Zustand einen sicheren Halt der Solarzellen-Platte auf dem Dachziegel gewährleistet und keine Beeinträchtigung der Wasserführung der Dachziegeleindeckung erbringt. Weiterhin ist Aufgabe der Erfindung ein möglichst einfaches und preisgünstiges Verfahren zur Herstellung eines derartigen Solar-Dachziegels. Diese Aufgabe wird erfindungsgemäß durch Solar-Dachziegel nach Anspruch 1 oder 4, Verfahren zur Herstellung solcher Dachziegel nach Anspruch 3 oder 6 und durch eine Vorrichtung zur Herstellung solcher Dachziegel nach Anspruch 8 gelöst. Vorteilhafte Ausgestaltungen der Erfindung ergeben sich aus den Unteransprüchen.

Die Erfindung ist im folgenden anhand bevorzugter, in den Zeichnungen dargestellter Ausführungsbeispiele mit weiteren Einzelheiten näher erläutert. Es zeigen:
- Fig. 1: eine Draufsicht auf eine erste Ausführungsform des Solar-Dachziegels,
- Fig. 2: einen Längsschnitt durch den Ziegel von Fig. 1,
- Fig. 3: einen Querschnitt durch zwei Solar-Dachziegel gemäß Fig. 1 in der Eindeckung,
- Fig. 4: eine Draufsicht auf eine zweite Ausführungsform des Solar-Dachziegels,
- Fig. 5: einen Längsschnitt durch den Dachziegel von Anspruch 1 mit einem Teil eines angrenzenden Ziegels in der Eindeckung,
- Fig. 6: einen Querschnitt durch den Ziegel von Fig. 4,
- Fig. 7: eine perspektivische Teilansicht einer weitere Ausführungsform des Solar-Dachziegels,
- Fig. 8: eine schematische Seitenansicht einer Abhebevorrichtung mit einer Einrichtung zum Einbringen von Nuten, und
- Fig. 9: eine schematische Draufsicht auf die Einrichtung von Fig. 8.

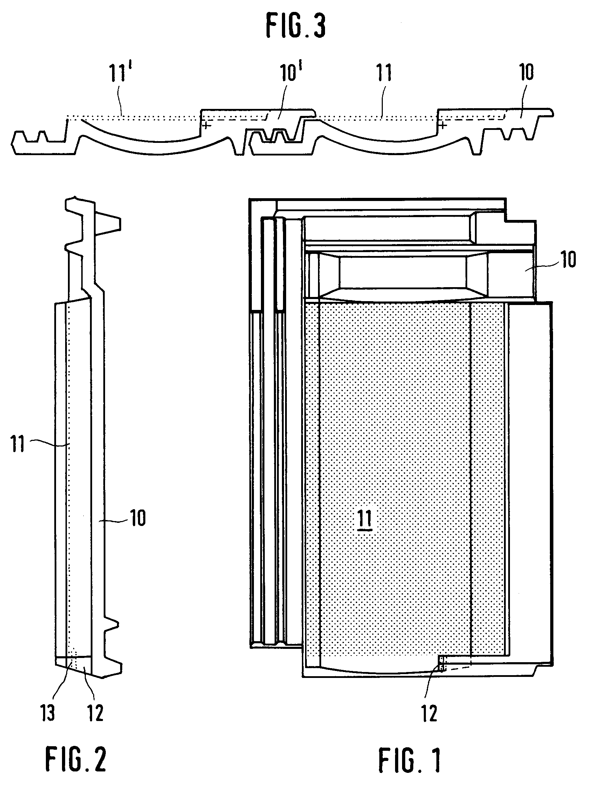

Bei der Ausführungsform nach den Fig. 1 bis 3 besteht der Solar-Dachziegel aus einem Dachziegel 10 und einer Solarzellen-Platte 11. Im Fußbereich des Dachziegels 10 steht von dessen Oberseite ein nockenartiges Auge 12 ab, dessen Durchbohrung horizontal verläuft. Im Fußteil der Solarzellen-Platte 11 steht von deren Unterseite ein hakenartiger Stift 13 ab, dessen umgebogener Bereich horizontal verläuft und in das Auge 12 einpaßt. Die Platte 11 liegt, wie aus den Fig. 1 bis 3 ersichtlich, auf ebenen Flächen der Ziegeloberseite auf. In der in Fig. 3 angedeuteten Eindeckung überdeckt der mit 10' bezeichnete Nachbarziegel an der Seite des Wasserfalzes 10a des Ziegels 10 die Solarzellen-Platte 11, wobei der Überdeckungs-Randstreifen in der Praxis eine Breite von beispielsweise 1 cm haben kann.

Die Solarzellen-Platte 11 wird somit an zwei Stellen auf dem darunterliegenden Dachziegel festgehalten, und zwar zum einen durch den im Auge 12 des Ziegels 10 geführten Stift 13 und zum anderen durch die Randüberdeckung durch den Nachbarziegel 10'. Damit wird eine völlig ausreichende Befestigung gewährleistet, deren Sicherheit gegenüber Windeinflüssen und dergleichen durchaus der Sicherheit des Dachziegelverbands entspricht. Andererseits ist aber die Solarzellen-Platte 11 schnell und mühelos an der Oberseite des Dachziegels 10 anzubringen bzw. von dieser wieder zu lösen. Dabei ist diese Befestigung äußerst kostengünstig, denn es ist lediglich am Dachziegel 10 das nockenartige Auge 12, an der Solarzellen-Platte 11 der hakenartige Stift 13 anzubringen.

Die Anbringung des hakenartigen Stifts 13 erfolgt zweckmäßigerweise durch Anschweißen an einem Rahmenteil der Solarzellen-Platte 11. Die Bildung des Auges 12 erfolgt vorzugsweise so, daß beim Ziegel-Preßvorgang ein Nocken ausgeformt und dieser Nocken dann, wenn der Preßling auf dem Trockenrähmchen liegt, vor dem Brennen durchstochen wird.

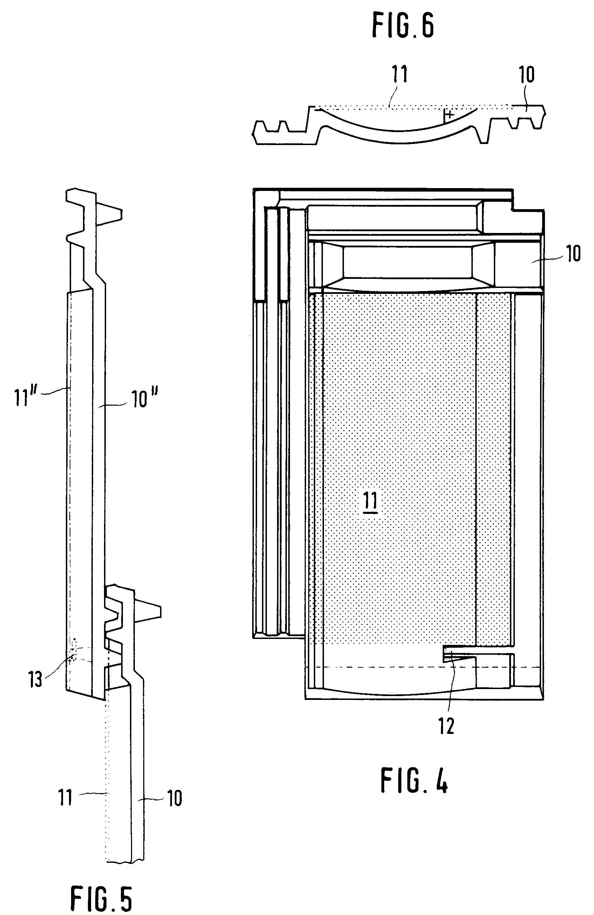

Die Fig. 4 bis 6 zeigen eine zweite Ausführungsform der Erfindung. Der Unterschied dieser Ausführungsform gegenüber der nach den Fig. 1 bis 3 besteht darin, daß die Überdeckung eines Randstreifens der Solarzellen-Platte 11 nicht an der Traufseite sondern an der Kopfseite des darunter liegenden Ziegels 10 erfolgt, und zwar durch den Fußteil des darüber befindlichen Ziegels 10''. Ersichtlich ist dies am besten aus Fig. 5. Ansonsten entspricht diese Ausführungsform, wie gesagt, vollständig derjenigen nach den Fig. 1 bis 3.

Bei den so ausgebildeten Solar-Dachziegeln ist es möglich, eine Überdeckung durch benachbarte Ziegel sowohl an der Traufseite als auch an der Kopfseite vorzusehen.

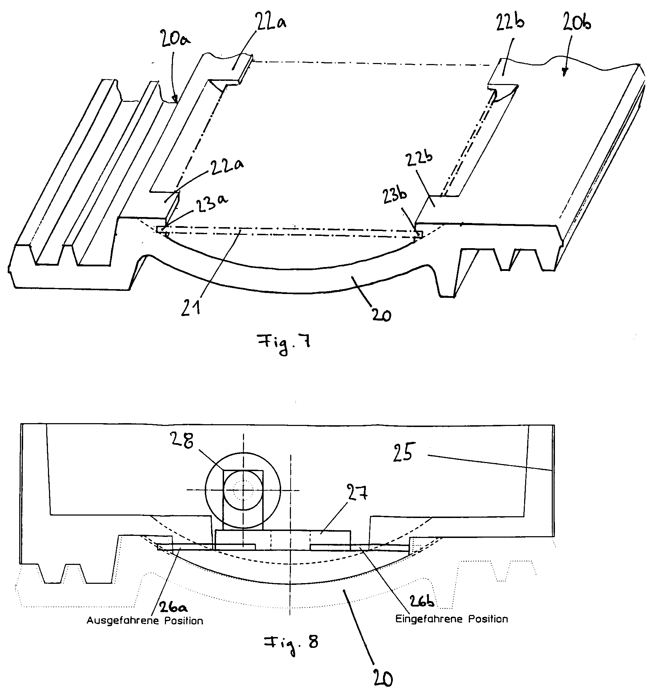

Auch der in Fig. 7 dargestellte Solar-Dachziegel besteht aus einem Dachziegel 20 und einer Solarzellen-Platte 21. Im Fußbereich 20a und im Kopfbereich 20b des Dachziegels stehen von dessen Oberseite mehrere, jeweils paarweise gegenüberliegende leistenartige Ansätze 22a, 22b ab, wobei jeweils die gegenüberliegenden Ansätze 22a und 22b in einem Abstand zueinander vorgesehen sind, der geringfügig kleiner als die Breite einer Solarzellen-Platte ist. Diese Ansätze weisen an ihren einander zugewandten, vertikalen Stirnflächen zur Kopf- bzw. Fußkante des Dachziegels parallele Einschubnuten 23a, 23b auf, die als zwei gegenüberliegende unterbrochene Führungsschienen für die Solarzellen-Platte 21 ausgebildet sind. Wie in Fig. 7 gezeigt, ist die Solarzellen-Platte von einer Längsseite des Dachziegels her in die Nuten 23a, 23b einschiebbar ist.

Die Ansätze 22a, 22b liegen vorzugsweise an einem Übergangsbereich vom Kopf- bzw. Fußbereich 20a, 20b des Dachziegels 20 zu einer mittleren, die Sichtfläche des Ziegels bildenden muldenartigen Vertiefung, so daß sich die Ansätze 22a, 22b nicht über die höchste Erhebung auf der Oberseite eines Dachziegels ohne solche Ansätze erheben, die in die Einschubnuten 23a, 23b eingeführte Solarzellen-Platte 21 aber dennoch einen genügend großen Abstand zur Dachziegeloberfläche aufweist.

Bei der in Fig. 7 gezeigten Ausgestaltung des erfindungsgemäßen Dachziegels kann die Solarzellen-Platte bereits vor der Eindeckung des Daches durch einfaches Einschieben der Solarzellen-Platte in die Nuten in ihrer Endlage auf dem Dachziegel positioniert und fixiert werden. Dabei können bei einer entsprechenden Dimensionierung des Abstandes der jeweils gegenüberliegenden leistenartigen Ansätze zueinander und der Tiefe und Höhe der Einschubnuten handelsübliche Solarzellen-Platten verwendet werden, ohne daß irgendwelche Umrüstvorkehrungen an diesen Solarzellen-Platten getroffen werden müßten.

Für eine ausreichende Stabilisierung der Solarzellen-Platte auf dem Dachziegel sind vorzugsweise drei einander gegenüberliegende Paare von Ansätzen an einem Dachziegel vorgesehen, wobei jedoch auch Dachziegel mit zwei oder vier solchen Ansatzpaaren, mit gegeneinander versetzten Ansätzen an Fuß- und Kopfseite des Ziegels oder mit jeweils durchgehenden leistenartigen Ansätzen geeignet eingesetzt sein können.

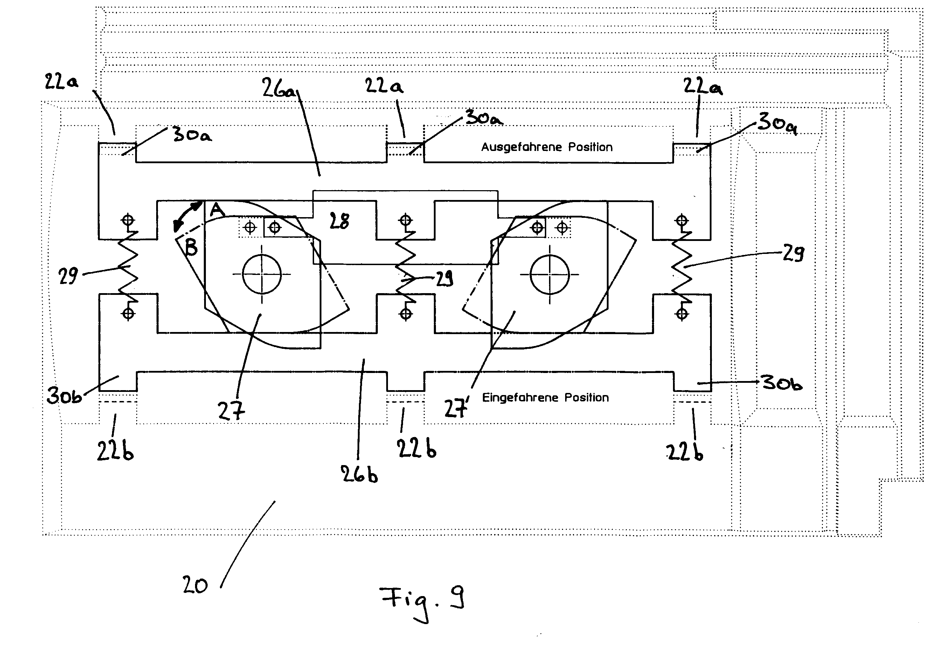

Fig. 8 und 9 zeigen eine Abhebevorrichtung mit einer Einrichtung zum Einbringen von Nuten in an einem Dachziegel ausgebildeten Ansätzen.

In Fig. 8 sind mit 25 eine Saugplatte, mit 26a und 26b zwei Schieber, mit 27 eine Exzenterscheibe und mit 28 ein pneumatischer Zylinder bezeichnet. Die Saugplatte 25 dient zum Aufnehmen und Halten eines gepreßten Dachziegel-Formlings von einer Preßform, beispielsweise der unteren Gipsform einer hydraulischen Dachziegel-Revolverpresse, durch Unterdruck, wie es aus dem Stand der Technik hinlänglich bekannt ist. Die beiden Schieber 26a, 26b liegen bei einem von der Saugplatte 25 gehaltenen Formling zwischen den jeweils gegenüberliegenden Ansatzpaaren 22a und 22b in der Höhe der auszubildenden Einschubnuten und sind über die Exzenterscheibe 27 durch den pneumatischen Zylinder 28 in horizontaler Richtung verschiebbar.

Die Arbeitsweise der erfindungsgemäßen Einrichtung zum Ausbilden von Nuten in den Ansätzen ist im folgenden mit Bezug auf Fig. 9 beschrieben. Beim Abheben des gepreßten Formlings von einer Preßform kommen die beiden Schieber 26a, 26b wie in Fig. 9 gezeigt, zwischen den Ansätzen 22a im Fußbereich des Dachziegels und den Ansätzen 22b im Kopfbereich des Dachziegels zu liegen. Bei dem dargestellten Ausführungsbeispiel sind drei Ansatzpaare vorgesehen und sind die Schieber 26a, 26b entsprechend mit drei nach außen ragenden, jeweils einem Ansatz 22a bzw. 22b gegenüberliegenden Vorsprüngen 30a bzw. 30b ausgebildet. Durch den pneumatischen Zylinder 28 werden zwei zwischen den Schiebern liegende Exzenter 27, 27' von einer Stellung A (durchgezogene Linien) in eine Stellung B (Strichpunktlinien) und zurück geschwenkt. Dadurch werden die Schieber wahlweise auseinandergedrückt (ausgefahrene Position) oder können, wie strichpunktiert dargestellt, von drei Rückstellfedern 29 wieder zusammengezogen werden (eingefahrene Position). Beim Auseinanderdrücken (A) der beiden Schieber 26a, 26b dringen die den entsprechenden Ansätzen 22a, 22b gegenüberliegenden Vorsprünge 30a, 30b der Schieber 26a, 26b in das noch formbare Ziegelmaterial ein und werden so die Führungsnuten 23a, 23b in die Ansätze 22a, 22b eingeformt. Nach dem Ausbilden der Nuten schwenken die Exzenter in Stellung B zurück und ziehen die Rückstellfedern 29 die Schieber 26a, 26b wieder zusammen, worauf der Formling 20 von der Saugplatte 25 (Fig. 9) freigegeben werden kann.

Der Solar-Dachziegel kann gegenüber den dargestellten Ausführungsformen Abwandlungen erfahren, ohne den Bereich der Erfindung zu verlassen. Dies gilt insbesondere für die Form des Auges 12 und des Stifts 13, sowie der Ansätze 22a, 22b und Einschubnuten 23a, 23b.

## Patentansprüche

1. Solar-Dachziegel, bestehend aus einem Dachziegel und einer darauf befestigten Solarzellen-Platte, dadurch gekennzeichnet, daß die Solarzellen-Platte in ihrem Fußbereich einen von der Plattenunterseite abstehenden, L-förmig parallel zur Plattenebene in die Horizontale umgebogenen Befestigungsstift (13) aufweist, daß von der Oberseite des Dachziegels (10) im Fußbereich ein Auge (12) absteht, durch dessen horizontale Öffnung der Befestigungsstift (13) lose hindurchgesteckt ist, und daß Dachziegel (10) und Solarzellen-Platte (11) derart dimensioniert sind, daß in der Eindeckung der daneben und/oder darüber befindliche Nachbarziegel (10', 10'') einen seitlichen und/oder oberen Bereich der Solarzellen-Platte (11) fixierend überdeckt.

2. Solar-Dachziegel nach Anspruch 1, dadurch gekennzeichnet, daß bei einem Falzziegel (10) der wasserfalzseitige Randbereich der Solarzellen-Platte (11) durch den seitlichen Nachbarziegel (10') überdeckt ist.

3. Verfahren zum Herstellen eines Solar-Dachziegels nach Anspruch 1 oder 2, dadurch gekennzeichnet, daß beim Pressen des Dachziegels an diesem ein Nocken ausgebildet, der noch feuchte Dachziegel auf ein Trockenrähmchen abgelegt und vor dem Brennvorgang der Nocken zur Bildung des Auges durchstochen wird.

4. Solar-Dachziegel, bestehend aus einem Dachziegel und einer darauf befestigten Solarzellen-Platte, dadurch gekennzeichnet, daß an der Oberseite des Dachziegels (20) in dessen Kopf- und in dessen Fußbereich jeweils ein zur Ziegelfußkante bzw. zur Ziegelkopfkante paralleler leistenartiger Ansatz (22a bzw. 22b) vorgesehen ist und in den einander zugewandten Stirnflächen der Ansätze gegenüberliegende Randkanten der Solarzellen-Platte (21) aufnehmende Einschubnuten (23a, 23b) ausgeschnitten sind.

5. Solar-Dachziegel nach Anspruch 4, dadurch gekennzeichnet, daß sich die leistenartigen Ansätze (22a, 22b) jeweils im Kopf- und im Fußbereich des Ziegels über die gesamte Ziegelbreite erstrecken.

6. Solar-Dachziegel nach Anspruch 4 oder 5, dadurch gekennzeichnet, daß die leistenartigen Ansätze (22a, 22b) im Kopf- und im Fußbereich des Dachziegels unterbrochen sind, so daß sich mehrere, jeweils paarweise gegenüberliegende Ansätze (22a, 22b) ergeben.

7. Solar-Dachziegel nach Anspruch 4 oder 5, dadurch gekennzeichnet, daß die leistenartigen Ansätze (22a, 22b) im Kopf- und im Fußbereich des Dachziegels unterbrochen sind, so daß sich mehrere jeweils zueinander versetzte Ansätze (22a, 22b) im Kopf- und im Fußbereich ergeben.

8. Verfahren zum Herstellen eines Solar-Dachziegels nach einem der vorangehenden Ansprüche 4 bis 7, dadurch gekennzeichnet, daß beim Pressen des Dachziegels an dessen Oberseite im Kopfbereich und im Fußbereich einander gegenüberliegende leistenartige Ansätze ausgebildet werden und daß vor dem Brennvorgang in die einander zugewandten Stirnflächen der Ansätze Nuten eingeformt werden.

9. Verfahren zum Herstellen eines Solar-Dachziegels nach Anspruch 8, dadurch gekennzeichnet, daß die Nuten in den Ansätzen während des Abhebens des Dachziegels von einer Preßform eingeformt werden.

10. Einrichtung zum Herstellen eines Solar-Dachziegels nach einem der vorangehenden Ansprüche 4 bis 7, mit einer oberen und einer unteren Preßform, einer Aufgabevorrichtung zum Aufgeben von Tonbatzen auf eine der Preßformen und einer Abhebevorrichtung zum Abheben eines gepreßten Dachziegel-Formlings von der Preßform, die eine Vorrichtung zum Halten des Formlings aufweist, dadurch gekennzeichnet, daß
die untere und die obere Preßform so ausgebildet sind, daß beim Pressen des Dachziegel-Formlings (20) an dessen Oberseite im Kopf- und im Fußbereich einander gegenüberliegende leistenartige Ansätze (22a, 22b) verbleiben, und
die Abhebevorrichtung eine Vorrichtung zum Einbringen von Nuten (23a, 23b) in die einander zugewandten Stirnflächen der jeweils gegenüberliegenden Ansätze aufweist.

11. Einrichtung nach Anspruch 10, dadurch gekennzeichnet, daß die Abhebevorrichtung zwei nebeneinander angeordnete, zu Kopf- und Fußkante des Dachziegel-Formlings (20) parallele, zwischen die gegenüberliegenden Ansätze (22a, 22b) einbringbare Schieber (26a, 26b) aufweist, die durch eine Antriebsvorrichtung (27, 28, 29) um eine vorgegebene Strecke auseinanderschiebbar und zusammenziehbar sind, so daß die Schieber bei einem von der Haltevorrichtung gehaltenen Dachziegel-Formling mit ihren voneinander abgewandten Außenkanten in den Ansätzen (22a, 22b) parallele Nuten (23a, 23b) einformen, deren Abstand der Breite einer Solarzellen-Platte (21) entspricht.

12. Einrichtung nach Anspruch 11, dadurch gekennzeichnet, daß die beiden Schieber (26a, 26b) mittels durch einen pneumatischen oder hydraulischen Zylinder (28) betätigbare, zwischen den Schiebern angeordnete Exzenterscheiben (27, 27') auseinanderschiebbar und durch Rückholfedern (29) wieder zusammenziehbar sind.
